# EUROPÄISCHE PATENTSCHRIFT

(11) **EP 3 586 017 B1**
(45) Veröffentlichungstag und Bekanntmachung des Hinweises auf die Patenterteilung: **23.07.2025**
(21) Anmeldenummer: 18707330.9
(22) Anmeldetag: 21.02.2018
(51) Int. Cl.: F16B 37/04, F16B 7/18

(54) **BEFESTIGUNGSVORRICHTUNG UND BEFESTIGUNGSBAUGRUPPE**
FASTENING DEVICE AND FASTENING ASSEMBLY
DISPOSITIF DE FIXATION ET MODULE DE FIXATION

(30) Priorität: 23.02.2017 DE 102017103771
(43) Veröffentlichungstag der Anmeldung: 01.01.2020
(73) Patentinhaber: MÜPRO Services GmbH, 65719 Hofheim am Taunus (DE)
(72) Erfinder: SCHEINBERGER, Marcus, 65719 Hofheim (DE); ROOS, Dominik, 65510 Idstein Wörsdorf (DE); EPING, Udo, 64297 Darmstadt (DE)
(74) Vertreter: Boult Wade Tennant LLP
(86) Internationale Anmeldenummer: PCT/EP2018/054301
(87) Internationale Veröffentlichungsnummer: WO 2018/153930

(56) Entgegenhaltungen:
- EP-A1- 2 816 243
- EP-B1- 1 902 222
- DE-A1- 102015 118 314
- US-A1- 2009 087 282

## Beschreibung

Die Erfindung betrifft eine Befestigungsvorrichtung zur Befestigung einer Last an einer Profilschiene, die einen im Wesentlichen C-förmigen Querschnitt und einen Längsschlitz aufweist, wobei die Befestigungsvorrichtung eine Deckplatte zur Auflage auf der Profilschiene, indem z.B. die Länge der Deckplatte und/oder Breite größer ist als die Breite des Längsschlitzes der Profilschiene, eine Gewindeplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, in der die Gewindeplatte mit Abstand und parallel zur Deckplatte gehalten ist. Die Erfindung betrifft des Weiteren eine Befestigungsbaugruppe mit einer solchen Befestigungsvorrichtung und mit einer Profilschiene, die einen im Wesentlichen C-förmigen Querschnitt und einen Längsschlitz aufweist, wobei die Länge der Gewindeplatte größer ist als die Breite des Längsschlitzes und die Breite der Gewindeplatte kleiner ist als die Breite des Längsschlitzes.

Solche Befestigungsvorrichtungen sind beispielsweise in der EP 1 902 222 B1 oder der DE 10 2007 014 795 A1 gezeigt.

Zum Befestigen der Last an der Profilschiene wird eine solche Befestigungsvorrichtung mit der Gewindeplatte so ausgerichtet, dass die Längsrichtung der Gewindeplatte im Wesentlichen mit der Längsrichtung der Profilschiene übereinstimmt. Anschließend wird die Befestigungsvorrichtung mit der Haltevorrichtung und der Gewindeplatte in den Längsschlitz eingeschoben, bis die Deckplatte an der Außenseite der Profilschiene aufliegt.

Nachfolgend wird die Befestigungsvorrichtung aus dieser Zwischenmontageposition um eine Drehachse in eine Vormontageposition gedreht, in der die Gewindeplatte die Schlitzflanken hintergreift. Abschließend wird die Gewindeplatte in die Endmontageposition von der Innenseite gegen die Unterseiten der Schlitzflanken gezogen, so dass die Schlitzflanken zwischen der Gewindeplatte und der Deckplatte und/oder dem Anbauteil geklemmt sind, wodurch das Anbauteil an der Profilschiene fixiert ist. Die Deckplatte kann als schwach dimensioniertes Element einzig der Aufgabe dienen, die Befestigungsvorrichtung vorläufig mit der Schiene zu verklemmen, sie kann aber auch als entsprechend stabil ausgeführtes Teil unmittelbar die Klemmkräfte im angezogenen Endzustand übertragen und dann z.B. zwischen der Profilschiene und dem Anbauteil liegen. Wenn die Deckplatte aus einem Kunststoff besteht, kann sie einstückig mit dem Haltekäfig ausgebildet sein. Die Deckplatte und der Haltekäfig können aber auch als zwei getrennt hergestellte Teile in geeigneter Weise aneinander befestigt sein, wobei sie auch aus unterschiedlichen Werkstoffen bestehen können.

Die Befestigungsvorrichtung ermöglicht es also, die Gewindeplatte in die Profilschiene einzuführen und anschließend in die Vormontageposition zu drehen. Die Gewindeplatte muss zum einen drehfest in der Befestigungsvorrichtung gehalten werden. Zum anderen muss die Gewindeplatte so in der Befestigungsvorrichtung gelagert sein, dass die Gewindeplatte relativ zur Deckplatte bewegt werden kann, um den Abstand zwischen der Deckplatte und der Gewindeplatte zu verringern oder zu vergrößern.

In der EP 1 026 415 B1 ist eine Befestigungsvorrichtung gezeigt, bei der die Gewindeplatte zwischen zwei sich von der Deckplatte weg erstreckenden Stegen relativ zur Deckplatte verschiebbar gelagert ist. Die Gewindeplatte weist seitlich Vorsprünge auf, die jeweils in als Führung für die Gewindeplatte ausgebildete Schlitze an den Stegen eingreifen. Über die Vorsprünge und die Schlitze ist die Gewindeplatte auf die Deckplatte zu oder von dieser weg verschiebbar in der Befestigungsvorrichtung gelagert und zuverlässig gehalten. Um die Gewindeplatte in nicht montiertem Zustand in einer definierten Position zu halten, sind weitere Elemente, beispielsweise eine Feder, erforderlich, die die Gewindeplatte von der Deckplatte weg oder auf diese zu drängen.

In der EP 1 538 349 A1 ist eine Befestigungsvorrichtung gezeigt, bei der die Gewindeplatte zwischen zwei Federelementen in einer Gleichgewichtslage gehalten ist.

Die US 2009/0087282 A1 und die EP 2 816 243 A1 zeigen Befestigungsvorrichtungen, bei denen die Führungselemente nicht als Federelemente mit Federlaschen ausgebildet sind. Auch die DE 10 2015 118 314 A1 zeigt kein als Federelement ausgebildetes Führungselement.

Bei den vorstehend beschriebenen Befestigungsvorrichtungen ist aber die Montage der Gewindeplatte an der Haltevorrichtung sehr aufwändig.

Eine weitere Befestigungsvorrichtung ist in der DE 10 2007 014 795 A1 gezeigt. Diese Befestigungsvorrichtung weist eine zylindrische Haltevorrichtung mit einem zylindrischen Distanzbund auf. Die Gewindeplatte kann einfach seitlich in die Haltevorrichtung eingeschoben werden. Am Distanzbund sind radiale Schlitze vorgesehen, durch die eine Federwirkung bereitgestellt wird, die eine Bewegung der Gewindeplatte auf die Deckplatte zu ermöglicht. Die Beweglichkeit auf die Deckplatte zu oder von dieser weg ist aber sehr begrenzt.

Aufgabe der Erfindung ist es, eine Befestigungsvorrichtung sowie eine Befestigungsbaugruppe mit einer solchen Befestigungsvorrichtung bereitzustellen, die einen sicheren drehfesten Halt der Gewindeplatte sowie eine flexible Lagerung der Gewindeplatte ermöglichen, so dass die Gewindeplatte relativ zur Deckplatte bewegbar ist, um den Abstand zwischen der Deckplatte und der Gewindeplatte zu verändern.

Hauptmerkmale der Erfindung sind in den Ansprüchen 1 und 9 angegeben. Ausgestaltungen sind Gegenstand der Ansprüche 2 bis 8 sowie 10.

Zur Lösung der Aufgabe ist bei einer Befestigungsvorrichtung zur Befestigung einer Last an einer Profilschiene, die einen im Wesentlichen C-förmigen Querschnitt und einen Längsschlitz aufweist, wobei die Befestigungsvorrichtung eine Deckplatte, deren Länge und/oder Breite größer ist als die Breite des Längsschlitzes der Profilschiene, eine Gewindeplatte, die eine Gewindebohrung aufweist und eine Länge größer als die Breite des Längsschlitzes und eine Breite kleiner als die Breite des Längsschlitzes besitzt, und eine an der Deckplatte angeordneten Haltevorrichtung für die Gewindeplatte zum Einstecken in die Profilschiene aufweist, in der die Gewindeplatte mit Abstand und parallel zur Deckplatte gehalten ist, zwischen der Haltevorrichtung und der Deckplatte wenigstens ein Führungselement vorgesehen, das vorzugsweise als Federelement ausgebildet ist, mit welchem die Halteeinrichtung beweglich geführt zu, vorzugsweise federnd an der Deckplatte gelagert ist und weiterhin zumindest eine Federlasche aufweist, die sich bogenförmig zwischen der Haltevorrichtung (30) und der Deckplatte (28) erstreckt, wobei ein mit der Deckplatte (28) in Verbindung stehender Abschnitt jeweils im Wesentlichen in der parallel zur Ebene der Deckplatte (28) und ein an der Haltevorrichtung (30) vorgesehener Abschnitt im Wesentlichen in der Einsteckrichtung E verläuft, wobei an der Deckplatte (28) eine Aufnahme (70) für das Federelement (47) vorgesehen ist, in der das Federelement (47) gelagert ist, oder das Federelement (47) fest mit der Deckplatte (28) verbunden ist.

Erfindungsgemäß ist die gesamte Haltevorrichtung mit dem Federelement relativ zur Deckplatte beweglich gelagert. Die Haltevorrichtung kann also mit der darin gehaltenen Gewindeplatte auf die Deckplatte zu oder von dieser weg bewegt werden. Der Halt der Gewindeplatte in der Haltevorrichtung ist unabhängig von der Federwirkung. Dadurch ist eine bessere Fixierung der Gewindeplatte in der Haltevorrichtung möglich, da keine bewegliche Lagerung der Gewindeplatte in der Haltevorrichtung erforderlich ist. Des Weiteren ermöglicht das Federelement einen größeren Federweg.

Durch die Ausbildung des Führungselements als Federelement wird der erfindungsgemäße Vorteil erreicht, dass eine definierte Bewegung der Gewindeplatte relativ zur Deckplatte ermöglicht ist.

Durch das Federelement wird die Haltevorrichtung und somit die Gewindeplatte weiterhin vorzugsweise von der Deckplatte weggedrängt, so dass die Gewindeplatte in der Vormontageposition nicht an den Rückseiten der Schlitzflanken anliegt und somit entlang des Längsschlitzes einfacher verschoben und positioniert werden kann. Bei der Demontage ergibt sich der Vorteil, dass durch die Wirkung der Feder eine gezielte Rückführung der Haltevorrichtung/Gewindeplatte erreicht wird, so dass sich die Befestigungsvorrichtung durch Rückdrehen entgegen der Eindrehrichtung bei der Montage leichter demontieren lässt.

Durch die Ausbildung des Federelements mit zumindest eine Federlasche wird ein sehr großer Federweg ermöglicht.

Die Federlasche erstreckt sich bogenförmig zwischen der Haltevorrichtung und der Deckplatte erstrecken, wobei ein mit der Deckplatte in Verbindung stehender Abschnitt jeweils im Wesentlichen parallel zur Ebene der Deckplatte verläuft.

Das Federelement kann fest mit der Deckplatte verbunden sein. In einer weiteren Ausführungsform ist das Federelement aber an der Deckplatte verschiebbar zur Deckplatte gelagert. Die Federkraft und der Federweg werden nicht allein durch die Federlaschen bereitgestellt, sondern die Federlaschen können sich bei einer Bewegung der Haltevorrichtung auf die Deckplatte zu oder von dieser weg relativ zur Deckplatte bewegen. Dadurch wird die Federwirkung verbessert und der Federweg vergrößert.

Der mehrteilige Aufbau kann zudem die Herstellung der Befestigungsvorrichtung erleichtern, da die einzelnen Teile, also die Haltevorrichtung mit dem Federelement sowie die Deckplatte jeweils eine einfachere Geometrie aufweisen. Zudem können die einzelnen Teile aus verschiedenen Materialien hergestellt werden. Beispielsweise können die Teile jeweils aus Metall oder Kunststoff hergestellt werden.

Beispielsweise ist an der Deckplatte eine Aufnahme für das Federelement vorgesehen, in der das Federelement, insbesondere verschiebbar, gelagert ist. Das Federelement kann in die Führung eintauchen.

Um zu verhindern, dass das Federelement aus der Aufnahme herausrutscht, können geeignete Fixierungsmittel vorgesehen sein. Beispielsweise weist das Federelement ein Rastelement auf, mit dem das Federelement an der Deckplatte verrastet ist. Das Rastelement erleichtert zudem die Montage des Federelements an der Deckplatte. Dieses muss lediglich so weit in die Führung eingeschoben werden, bis das Rastelement an der Deckplatte verrastet. Vorzugsweise entspricht die Position, in der das Federelement verrastet ist, einer Grundposition, von der aus durch Einfedern bzw. Eintauchen des Federelement die Haltevorrichtung auf die Deckplatte zu bewegt werden kann. Das heißt, der maximale Abstand zwischen Deckplatte und Gewindeplatte ist durch die Rastelemente vorgegeben.

Vorzugsweise sind zumindest zwei Federelemente vorgesehen. Die Federelemente sind beispielsweise so verteilt, dass die Haltevorrichtung beim Ein- oder Ausfedern der Federelemente nicht verkippen kann, sondern die Gewindeplatte in einer zur Deckplatte im Wesentlichen parallelen Position gehalten wird, wodurch die Stabilität der Befestigungsvorrichtung erhöht wird.

Die Federelemente können auf verschiedene Weise angeordnet sein. Beispielsweise können diese jeweils paarweise angeordnet sein, wobei die einander zugeordneten Federelemente beispielsweise jeweils parallel zueinander verlaufen. Die Federelemente können aber auch bezüglich einer Umfangsrichtung um die Haltevorrichtung, insbesondere gleichmäßig, verteilt angeordnet. Vorzugsweise sind die Federelemente so angeordnet, dass es durch die resultierende Federkraft nicht zu einem Kippen der Haltevorrichtung bzw. der Gewindeplatte kommen kann.

Optional kann eine Gewindestange oder eine Schraube mit einem zum Innengewinde der Gewindeplatte korrespondierenden Außengewinde vorgesehen sein, die in das Innengewinde der Gewindeplatte eingedreht ist und die auf der der Gewindeplatte entgegengesetzten Seite der Deckplatte über die Deckplatte vorsteht. Die Gewindestange kann sich an der Deckplatte oder einem Anbauteil mit einem Kopf oder einer aufgeschraubten Mutter abstützen. Durch Eindrehen der Gewindestange in das Innengewinde der Gewindeplatte wird die Gewindeplatte, beispielsweise gegen die Federkraft der Federelemente, zur Deckplatte gezogen bzw. durch ein Herausdrehen aus der Gewindeplatte eine Bewegung von der Deckplatte weg ermöglicht.

Beispielsweise besteht die Haltevorrichtung aus Kunststoff besteht und das wenigstens eine Federelement ist einstückig an der Haltevorrichtung angeformt.

Zur Lösung der Aufgabe ist des Weiteren eine Befestigungsbaugruppe mit einer vorgehend beschriebenen Befestigungsvorrichtung und mit einer Profilschiene vorgesehen, die einen im Wesentlichen C-förmigen Querschnitt und einen Längsschlitz aufweist, wobei die Länge der Gewindeplatte größer ist als die Breite des Längsschlitzes und die Breite der Gewindeplatte kleiner ist als die Breite des Längsschlitzes. Die Befestigungsvorrichtung ist in einer ersten Orientierung, in der die Aufnahme in Längsrichtung der Profilschiene angeordnet ist, in Einsteckrichtung in eine Zwischenmontageposition den Längsschlitz einführbar, in der die Deckplatte an auf dem Längsschlitz der Profilschiene aufliegt. Die Befestigungsvorrichtung kann von der Zwischenmontageposition um eine Drehachse in einer Montagerichtung in eine Vormontageposition gedreht werden, in der die Gewindeplatte die Schlitzflanken des Längsschlitzes hintergreift. Die Befestigungsvorrichtung kann durch ein Spannen der Gewindeplatte gegen die Schlitzflanken die Befestigungsvorrichtung von der Vormontageposition in eine Endmontageposition bewegt werden. Das Federelement kann die Gewindeplatte von den Schlitzflanken wegdrücken, so dass die Befestigungsvorrichtung frei in Längsrichtung der Profilschiene bewegbar ist. Das Federelement kann die Gewindeplatte aber auch gegen die Rückseite des Längsschlitzes ziehen, so dass eine Vorklemmung der Befestigungsvorrichtung erfolgt.

Um ein Überdrehen der Befestigungsvorrichtung über die Vormontageposition hinaus zu vermeiden, kann an der Deckplatte und/oder an der Haltevorrichtung zumindest ein Drehanschlag vorgesehen sein, der in der Vormontageposition an der Profilschiene anliegt und ein Drehen in Montagerichtung über die Vormontageposition hinaus verhindert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Explosionsansicht einer ersten Ausführungsform einer erfindungsgemäßen Befestigungsbaugruppe;
- Fig. 2a: eine perspektivische Ansicht der Befestigungsbaugruppe aus Fig. 1;
- Fig. 2b: eine Schnittansicht durch die Befestigungsbaugruppe aus Fig. 2a
- Fig. 2c: eine Draufsicht auf die Befestigungsbaugruppe aus Fig. 2a;
- Fig. 3a: eine erste perspektivische Ansicht der Befestigungsvorrichtung der Befestigungsbaugruppe aus Fig. 2a;
- Fig. 3b: eine zweite perspektivische Ansicht der Befestigungsvorrichtung der Befestigungsbaugruppe aus Fig. 2a;
- Fig. 4a: eine Schnittansicht durch die Befestigungsvorrichtung aus Fig. 3a und Fig. 3b;
- Fig. 4b: eine Draufsicht auf die Befestigungsvorrichtung aus Fig. 3a und Fig. 3b;
- Fig. 4c: eine zweite Schnittansicht durch die Befestigungsvorrichtung aus Fig. 3a und Fig. 3b;
- Fig. 4d: eine Ansicht der Unterseite der Befestigungsvorrichtung aus Fig. 3a und Fig. 3b;
- Fig. 5a: eine erste perspektivische Ansicht der Montage einer Gewindeplatte in der Befestigungsvorrichtung aus Fig. 3a und Fig. 3b;
- Fig. 5b: eine zweite perspektivische Ansicht der Montage einer Gewindeplatte in der Befestigungsvorrichtung aus Fig. 3a und Fig. 3b;
- Fig. 6a: eine erste perspektivische Ansicht der Befestigungsvorrichtung aus Fig. 3a und Fig. 3b mit einer Gewindeplatte;
- Fig. 6b: eine zweite perspektivische Ansicht der Befestigungsvorrichtung aus Fig. 3a und Fig. 3b mit einer Gewindeplatte;
- Fig. 7a: eine Draufsicht auf die Befestigungsvorrichtung aus Fig. 6a und Fig. 6b;
- Fig. 7b: eine Schnittansicht durch die Befestigungsvorrichtung aus Fig. 6a und Fig. 6b;
- Fig. 8: eine Draufsicht auf eine Befestigungsbaugruppe mit der Befestigungsvorrichtung aus Fig. 6a und Fig. 6b;
- Fig. 9: Eine Explosionsansicht einer ersten Ausführungsform einer erfindungsgemäßen Befestigungsbaugruppe;
- Fig. 10a: eine perspektivische Ansicht der Befestigungsbaugruppe aus Fig. 9;
- Fig. 10b: eine Schnittansicht durch die Befestigungsbaugruppe aus Fig. 10a
- Fig. 10c: eine Draufsicht auf die Befestigungsbaugruppe aus Fig. 10a;
- Fig. 11a: eine erste perspektivische Ansicht des Halteelements der Befestigungsvorrichtung der Befestigungsbaugruppe aus Fig. 10a;
- Fig. 11b: eine zweite perspektivische Ansicht des Halteelements aus Fig. 11a;
- Fig. 12a: eine Schnittansicht durch das Haltelement aus Fig. 11a und Fig. 11b;
- Fig. 12b: eine zweite Schnittansicht durch das Haltelement aus Fig. 11a und Fig. 11b;
- Fig. 12c: eine Draufsicht auf das Haltelement aus Fig. 11a und Fig. 11b;
- Fig. 13a: eine erste Explosionsansicht der Befestigungsvorrichtung der Befestigungsbaugruppe aus Fig.10a;
- Fig. 13b: eine zweite Explosionsansicht der Befestigungsvorrichtung der Befestigungsbaugruppe aus Fig.10a;
- Fig. 14a: eine erste perspektivische Ansicht der Befestigungsvorrichtung aus Fig.13a und Fig. 13b;
- Fig. 14b: eine zweite perspektivische Ansicht der Befestigungsvorrichtung aus Fig. 13a und Fig. 13b;
- Fig. 15a: eine Draufsicht auf die Befestigungsvorrichtung aus Fig. 14a und Fig. 14b; und
- Fig. 15b: eine Schnittansicht durch die Befestigungsvorrichtung aus Fig. 14a und Fig. 14b.

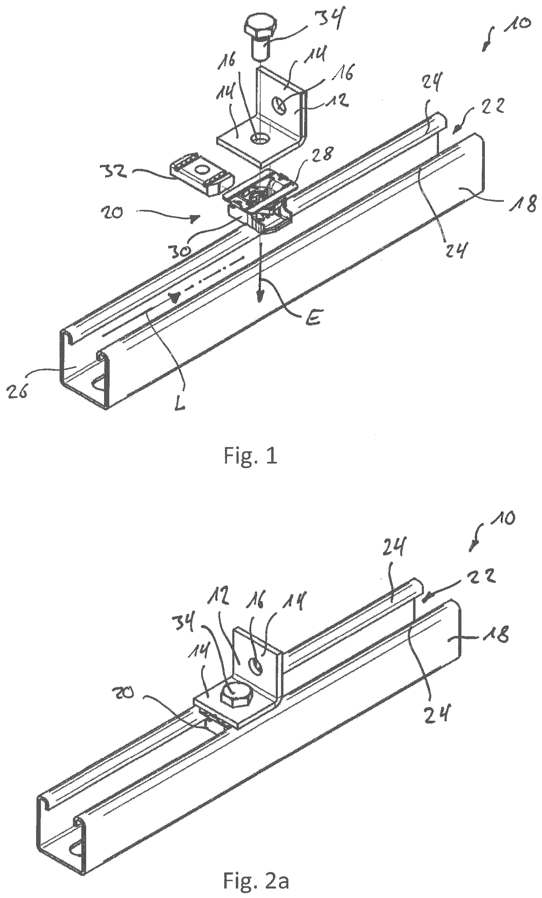

Die Figuren 1, 2a bis 3c sowie 8 zeigen eine Befestigungsbaugruppe 10 zur Befestigung einer Last, beispielsweise eines Anbauteils 12. Das Anbauteil 12 ist hier ein Winkelblech mit zwei rechtwinklig zueinander stehenden Schenkeln 14 mit jeweils einer Bohrung 16. Das Anbauteil 12 kann auch eine andere Form aufweisen. Des Weiteren kann das Winkelblech lediglich ein Adapter sein, um eine Last an der Profilschiene 18 zu befestigen.

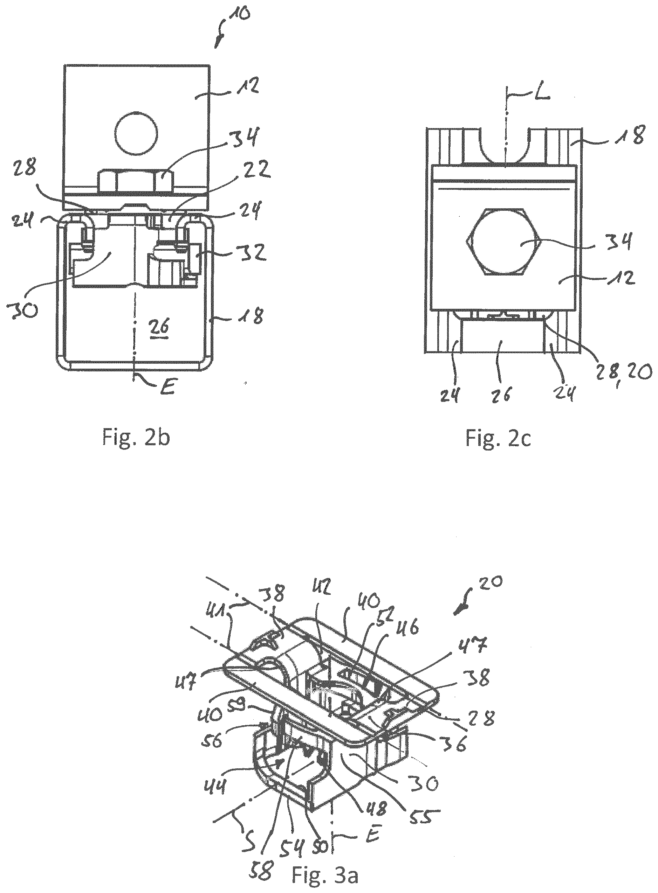

Die in den Figuren 3a bis 7b gezeigte Befestigungsbaugruppe 10 weist eine Profilschiene 18 sowie eine Befestigungsvorrichtung 20 auf. Die Profilschiene 18 hat einen im Wesentlichen C-förmigen Querschnitt und weist einen Längsschlitz 22 auf, der von zwei im Wesentlichen parallelen Schlitzflanken 24 begrenzt ist. Hinter den Schlitzflanken 24 ist ein Aufnahmeraum 26 vorgesehen.

Die in den Figuren 2 bis 8 gezeigte Befestigungsvorrichtung 20 weist eine Deckplatte 28, eine Haltevorrichtung 30 für eine Gewindeplatte 32, eine Gewindeplatte 32 sowie eine Gewindestange 34 auf.

Mit der Befestigungsvorrichtung 20 kann die Gewindeplatte 32 in den Längsschlitz 22 eingeführt und in diesem um eine Drehachse D in eine Vormontageposition gedreht werden, in der die Gewindeplatte 32 die Schlitzflanken 24 hintergreift. Anschließend kann die Gewindeplatte 32 durch die Gewindestange 34 gegen das Anbauteil 12 in eine Endmontageposition gezogen werden, in der die Schlitzflanken 24 zwischen dem Anbauteil 12 und der Gewindeplatte 32 geklemmt sind, wodurch das Anbauteil 12 an der Profilschiene 18 fixiert ist.

Die Deckplatte 28 ist im Wesentlichen rechtwinklig (alternativ polygonal, oval oder sternförmig) ausgebildet und weist eine Grundplatte 36 auf, die aus zwei parallelen Stegen 38 gebildet ist, sowie zwei Seitenplatten 40, die an entgegengesetzten Rändern der Grundplatte 36 um eine Sollverformungsstelle 41 schwenkbar gelagert sind. Beispielsweise ist die Sollverformungsstelle 41 zwischen der Grundplatte 36 und den Seitenplatten 40 jeweils durch ein Filmscharnier gebildet. Die Deckplatte 28 weist des Weiteren eine Öffnung 42 für die Gewindestange 34 auf.

Die Haltevorrichtung 30 erstreckt sich in einer Einsteckrichtung E im Wesentlichen senkrecht von der Deckplatte 28 weg und weist einen im Wesentlichen parallel zur Ebene der Deckplatte 28 verlaufende Aufnahme 44 für die Gewindeplatte 32 auf, in der die Gewindeplatte 32 im Wesentlichen parallel zur Deckplatte 28 gehalten werden kann. Die Aufnahme 44 erstreckt sich durch die Haltevorrichtung 30 hindurch, so dass die Gewindeplatte 32 in eine quer zur Einsteckrichtung E verlaufenden Einschubrichtung S in die Aufnahme 44 eingeschoben werden kann.

Durch die Deckplatte 28 sowie die Haltevorrichtung 30 erstreckt sich eine in Einsteckrichtung E verlaufende Durchtrittsöffnung 46 für die Gewindestange 34.

Die Aufnahme 44 wird an einer der Deckplatte 28 zugewandten Oberseite 48 und an einer der Deckseite abgewandten Unterseite 50 jeweils von einem Rahmen 52, 54 begrenzt. Die Höhe der Aufnahme 44 entspricht im Wesentlichen der Höhe der Gewindeplatte 32, so dass eine eingeschobene Gewindeplatte 32 in Einsteckrichtung E kein oder nur ein geringes Spiel aufweist. Die Rahmen 52, 54 sind durch zwei bezüglich der Durchtrittsöffnung 46 diametral gegenüberliegende Stege 55 verbunden, die die seitliche Begrenzung der Aufnahme 44 bilden.

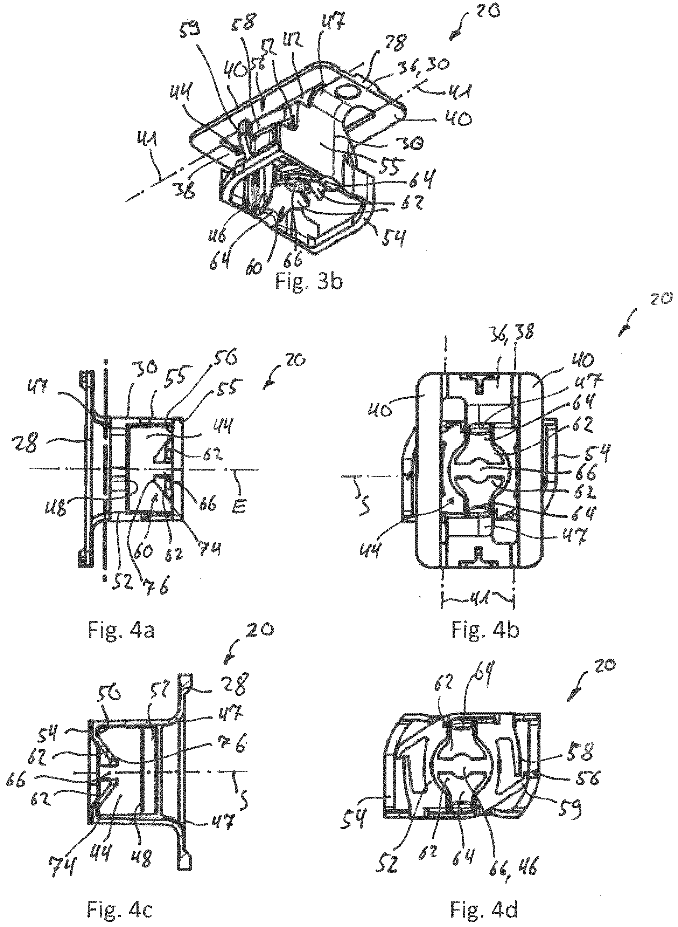

Wie in den Figuren 3a, 3b und 4d zu sehen ist, sind am oberen Rahmen 52 des Weiteren außenseitig zwei Federanordnungen 56 vorgesehen, die bezüglich der Drehachse D diametral gegenüberliegend angeordnet sind und jeweils zwei bezüglich der Drehachse D 46 radial federnde Federlaschen 58, 59 aufweisen. Die Federlaschen 58, 59 erstrecken sich jeweils bezüglich der Drehachse D radial nach außen weg und sind in Umfangsrichtung bezüglich der Drehachse D gekrümmt. Des Weiteren erstrecken sich die Federlaschen 58, 59 einer Federanordnung 56 bezüglich einer Umfangsrichtung um die Haltevorrichtung 30 bzw. um die Drehachse D in entgegengesetzte Richtungen und aufeinander zu.

Wie insbesondere in Figur 4d zu sehen ist, überlappen sich die Federlaschen 58, 59 einer Federanordnung 56 jeweils in radialer Richtung bezüglich der Drehachse D und weisen unterschiedliche Krümmungen auf.

Am unteren Rahmen 54 ist des Weiteren eine konzentrisch zur Drehachse D angeordnete und in die Aufnahme 44 ragende Halteeinrichtung 60 für die Gewindeplatte 32 vorgesehen. Wie in den Figuren 4a und 4c zu sehen ist, ist die Halteeinrichtung 60 mit einem ersten Ende 74 am Rahmen 54 und somit an der Haltevorrichtung 30 befestigt und erstreckt sich mit einem zweiten, freien Ende in der Art eines Dorns 76 entgegengesetzt der Einsteckrichtung E in die Aufnahme 44.

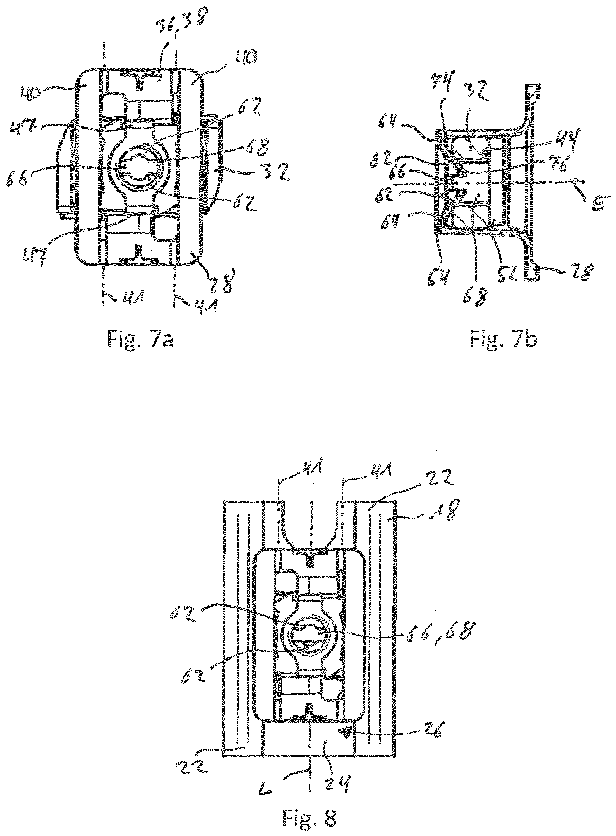

Die Halteeinrichtung 60 erstreckt sich in eine Bohrung 68 der Gewindeplatte 32 und fixiert so die Gewindeplatte 32 in der Aufnahme 44. Wie in Figur 7b zu sehen ist, ragt das freie Ende 76 in die Bohrung 68 und liegt am Bohrungsdurchmesser an, so dass die Gewindeplatte 32 spielfrei gehalten ist, wobei die Bohrung 68 zur Drehachse D zentriert ist.

Wie in Figur 7b des Weiteren zu sehen ist, nimmt der Umkreisdurchmesser der Halteeinrichtung 60 vom freien Ende 76 weg zu, so dass sich die Halteeinrichtung 60 zu ihrem freien Ende hin verjüngt, wodurch sich die Halteeinrichtung 60 bei Bohrungen 68 mit verschiedenen Durchmessern unterschiedlich weit in die Bohrung 68 erstrecken und jeweils am unteren Rand der Bohrung anliegen kann.

Wie insbesondere in den Figuren 3b und 4d zu sehen ist, weist die Halteeinrichtung 60 zwei, in Umfangsrichtung bezüglich der Durchtrittsöffnung 46 gleichmäßig verteilt angeordnete Halteelemente 62 auf. Jedes der Halteelemente 62 ist jeweils über eine Federlasche 64 federnd mit dem Rahmen 54 verbunden. Genau genommen federn die Halteelemente 62 im Wesentlichen um eine Kreisbahn, deren Mittelpunkt jeweils der Anbindungspunkt der Federlaschen an der Haltevorrichtung 30 ist. Der Abstand der Außenwandung der Halteelemente 62 von der Drehachse D nimmt in Einsteckrichtung E zu. Die Umhüllende der Halteelemente 62 weist im Wesentlichen eine konusförmige Oberfläche auf.

Des Weiteren weist die Halteeinrichtung 60 eine in Einsteckrichtung E verlaufende, konzentrisch zur Durchtrittsöffnung 46 angeordnete Öffnung 66 auf. Da die Halteelemente 62 federnd gelagert sind, können diese auch in radialer Richtung bezüglich der Durchtrittsöffnung 46 federnd nachgeben, so dass die Öffnung 66 senkrecht zur Einsteckrichtung E, also bezüglich der Durchtrittsöffnung 46 in radialer Richtung, elastisch aufweitbar ist.

Wie in den Figuren 3a und 3b zu sehen ist, ist die Haltevorrichtung 30 über als Federlaschen ausgebildete Federelemente 47 mit der Deckplatte 28 verbunden, so dass die Haltevorrichtung 30 in Einsteckrichtung E federnd mit der Deckplatte 28 gekoppelt ist. Die Federlaschen erstrecken sich bogenförmig zwischen der Deckplatte 28 und der Haltevorrichtung 30, wobei ein an der Haltevorrichtung 30 vorgesehener Abschnitt im Wesentlichen in Einsteckrichtung E verläuft und ein an der Deckplatte 28 vorgesehener Abschnitt im Wesentlichen in der Ebene der Deckplatte 28 verläuft. Durch die Federelemente 47 ist die Gewindeplatte 32 in Einsteckrichtung E relativ zur Deckplatte 28 elastisch verschiebbar.

Die Gewindestange 34 weist ein zum Innengewinde der Gewindeplatte 32 korrespondierendes Außengewinde auf, mit dem sich die als Schraube ausgebildete Gewindestange 34 in die Bohrung der Gewindeplatte 32 erstreckt. Die Gewindestange 34 stützt sich des Weiteren mit einem Kopf 35 am Anbauteil 12 ab.

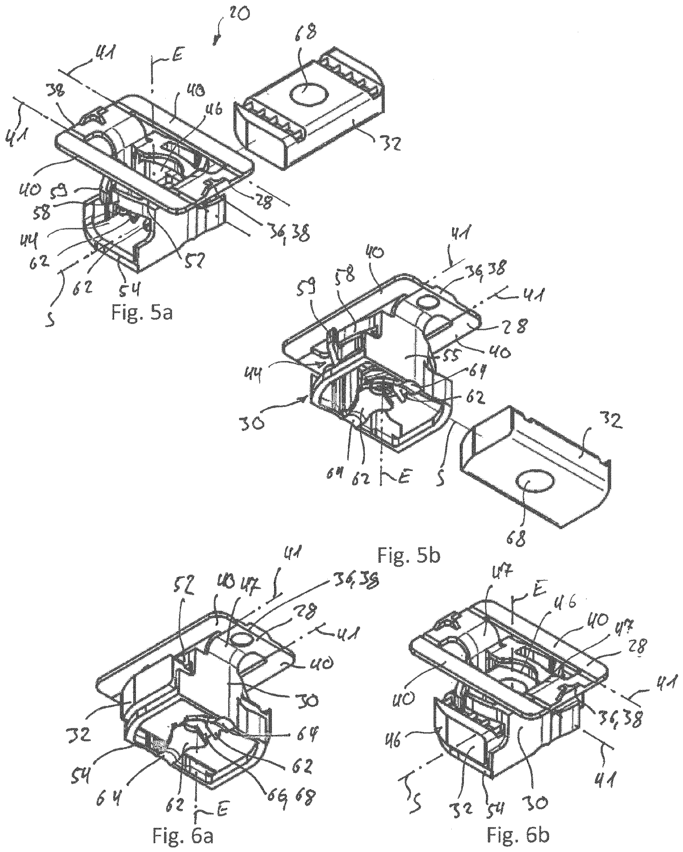

Zur Befestigung des Anbauteils 12 an der Profilschiene 18 wird zunächst eine Gewindeplatte 32 in Einschubrichtung S in die Aufnahme 44 eigeschoben (Figuren 5a und 5b). Die Gewindeplatte 32 ist im Wesentlichen rechteckig ausgebildet, wobei die Breite der Gewindeplatte 32 kleiner ist als der Abstand der beiden Schlitzflanken 24 und die Länge der Gewindeplatte 32 größer ist als der Abstand der beiden Schlitzflanken 24 und im Wesentlichen der Breite des Aufnahmeraums 26 entspricht. Die Gewindeplatte 32 hat des Weiteren eine Bohrung 68 mit einem Innengewinde.

Die Halteelemente 62 können in Einsteckrichtung E so weit federnd nachgeben, so dass diese das Einschieben der Gewindeplatte 32 nicht oder nur geringfügig behindern. Insbesondere können diese vollständig aus der Aufnahme 44 herausfedern. Sobald die Gewindeplatte 32 so weit in die Aufnahme 44 eingeschoben ist, dass die Bohrung 68 konzentrisch zur Durchtrittsöffnung 46 liegt, federn die Halteelemente 62 in die Bohrung 68. Die Halteelemente 62 federn so weit in die Bohrung 68 ein, bis die radiale Außenseite der Halteelemente 62 jeweils am unteren Rand des Bohrungsdurchmessers der Bohrung 68 anliegt (Figuren 6a und 6b). Da der Querschnitt der Halteeinrichtung 62 am ersten Ende 74 größer ist als der Bohrungsdurchmesser der Bohrung 68 und der Querschnitt der Halteeinrichtung 60 am zweiten Ende 76 kleiner ist als der Durchmesser der Bohrung 68, ist die Gewindeplatte 32 in der Aufnahme 44 so zentriert, dass die Bohrung 68 konzentrisch zur Durchtrittsöffnung 46 angeordnet ist.

Die Gewindestange 34 kann anschließend durch die Durchtrittsöffnung 46 in die Bohrung 68 der Gewindeplatte 32 eingeführt werden. Die Gewindestange 34 kann dabei vor oder nach dem Einsetzen der Befestigungsvorrichtung 20 in die Profilschiene 18 eingeschoben werden.

Da die Halteelemente 62 federnd gelagert sind, kann die Gewindestange 34 das freie Ende 76 bzw. die Halteelemente 62 aus der Bohrung 68 herausdrängen. Insbesondere kann sich die Gewindestange 34 zwischen den aus der Bohrung 68 herausgedrängten Halteelemente 62 durch die Öffnung 66 erstrecken. Wird die Gewindestange 34 aus der Bohrung 68 herausgedreht, können die Halteelemente 62 wieder in die Bohrung 68 einfedern und die Gewindeplatte 32 halten.

Nach dem Einsetzen der Gewindeplatte 32 in die Aufnahme 44 wird die Befestigungsvorrichtung 20 mit der Gewindeplatte 32 so ausgerichtet, dass die Längsrichtung der Gewindeplatte 32 im Wesentlichen der Längsrichtung L des Längsschlitzes 22 entspricht. Die Befestigungsvorrichtung 20 wird so weit in Einsteckrichtung E in den Längsschlitz 22 in eine Zwischenmontageposition eingeschoben, bis die Deckplatte 28 an den Schlitzflanken 24 aufliegt und sich die Gewindeplatte 32 in Einsteckrichtung E hinter den Schlitzflanken befindet. Die Breite der Haltevorrichtung 30 sowie die Breite der Gewindeplatte 32 sind kleiner als die Breite des Längsschlitzes 22, so dass die Haltevorrichtung 30 mit der Gewindeplatte 32 in den Längsschlitz 22 eingeschoben werden kann.

Anschließend wird die Befestigungsvorrichtung 20 in Drehrichtung D in eine Vormontageposition gedreht, in der die Gewindeplatte 32 die Schlitzflanken 24 hintergreift. Vorzugsweise wird die Befestigungsvorrichtung 20 um ca. 90° gedreht. Wie in Figur 8 zu sehen ist, verlaufen die Sollverformungsstellen 41 zwischen der Grundplatte 38 und den Seitenplatten 40 in dieser Position in Längsrichtung L, wobei sich die Sollverformungsstellen 41 in Einsteckrichtung E über dem Längsschlitz 22 befinden.

In dieser Vormontageposition sowie in der vorangehend beschriebenen Zwischenmontageposition liegen die Federanordnungen 56 an den einander zugewandten Rändern der Schlitzflanken 24 an und zentrieren die Befestigungsvorrichtung 20 im Längsschlitz 22 und halten diese spielfrei, so dass die Befestigungsvorrichtung 20 nicht aus dem Längsschlitz 22 fallen kann. Da die Federanordnungen 56 jeweils zwei Federlaschen 58, 59 aufweisen, ist die Befestigungsvorrichtung 20 zuverlässig, auch bei einer Drehung entgegen der Drehrichtung D, im Längsschlitz 22 zentriert und durch Klemmung gehalten.

An der Deckplatte 28, der Haltevorrichtung 30 und/oder an der Gewindeplatte 32 können Anschläge vorgesehen sein, die ein Drehen der Befestigungsvorrichtung 20 in Drehrichtung D über die Vormontageposition hinaus verhindern. Beispielsweise sind die Anschläge an den Federlaschen 58, 59 vorgesehen.

Abschließend wird die Gewindeplatte 32 durch die Gewindestange 34 entgegen der Einsteckrichtung E gegen das Anbauteil 12 gezogen, um die Schlitzflanken 24 zwischen dem Anbauteil 12 und der Gewindeplatte 32 zu verklemmen. Da die Haltevorrichtung 30 federnd mit der Deckplatte 28 verbunden ist, können die Deckplatte 28 und die Haltevorrichtung 30 aufeinander zu bewegt werden.

Die Deckplatte 28 wird dabei vom Anbauteil 12 in den Längsschlitz 22 gedrängt, wobei die Seitenplatten 40 durch die Schlitzflanken 24 um die Sollverformungsstellen 41 umgefaltet werden, so dass die Deckplatte 28 in den Längsschlitz 22 eintauchen kann. Die Seitenplatten 40 gleiten dabei auf den Schlitzflanken 24, die nach oben, also auf der dem Aufnahmeraum 26 abgewandten Seite, abgerundete Kanten aufweisen.

In der Endmontageposition ist die Deckplatte 28 in den Längsschlitz 22 eingetaucht und das Anbauteil 12 liegt unmittelbar auf den Schlitzflanken 24 der Profilschiene 18 auf. Die Schlitzflanken 24 sind also unmittelbar zwischen der Gewindeplatte 32 und dem Anbauteil 12 geklemmt. Die Deckplatte 28 befindet sich nicht im Kraftfluss zwischen der Gewindeplatte 32 bzw. dem Anbauteil 12 und der Profilschiene 18.

Beispielsweise besteht die Befestigungsvorrichtung 20 aus Kunststoff und die Gewindeplatte 32 sowie die Profilschiene 18 sind aus Metall hergestellt. Bei Verwendung der vorstehend beschriebenen Befestigungsvorrichtung 20 befindet sich nach dem Spannen der Gewindeplatte 32 gegen die Schlitzflanken 24 bzw. gegen die Last in der endgültigen Montageposition unter Last somit kein Kunststoff im Kraftfluss, wodurch die Zuverlässigkeit der Verbindung des Anbauteils 12 an der Profilschiene 18 erhöht werden kann.

Durch die Halte- und Zentriervorrichtung 60 wird die Gewindeplatte 32 in der Haltevorrichtung 30 fixiert, so dass diese nicht während der Montage aus der Aufnahme 44 fallen kann. Da die Halteelemente 62 federnd ausgebildet sind, können diese auch unterschiedliche Dicken der Gewindeplatte 32 ausgleichen. Insbesondere kann die Höhe der Aufnahme 44 in Einsteckrichtung E auch größer sein als die Dicke der Gewindeplatte 32, wobei die Halteeinrichtung 60 die Gewindeplatte 32 federbeaufschlagt gegen die Oberseite oder die Unterseite der Aufnahme 44 drängt.

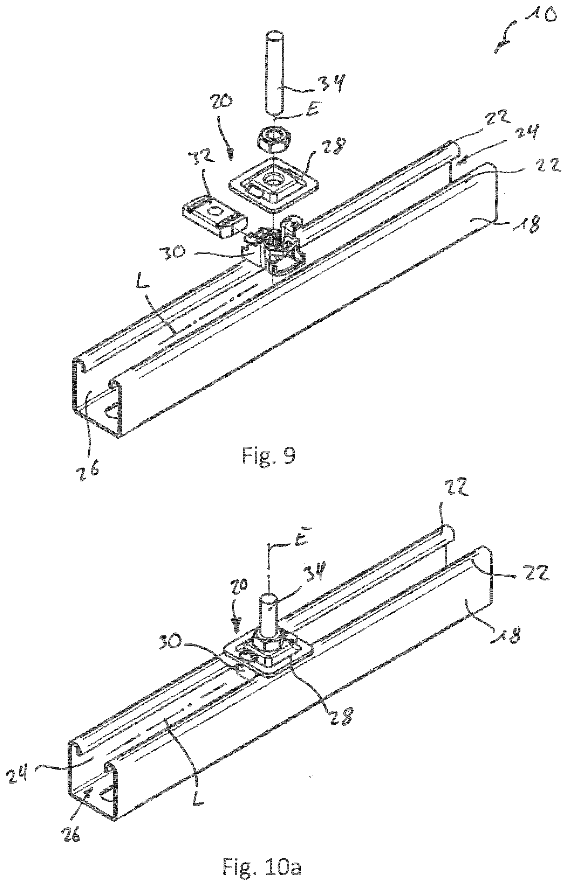

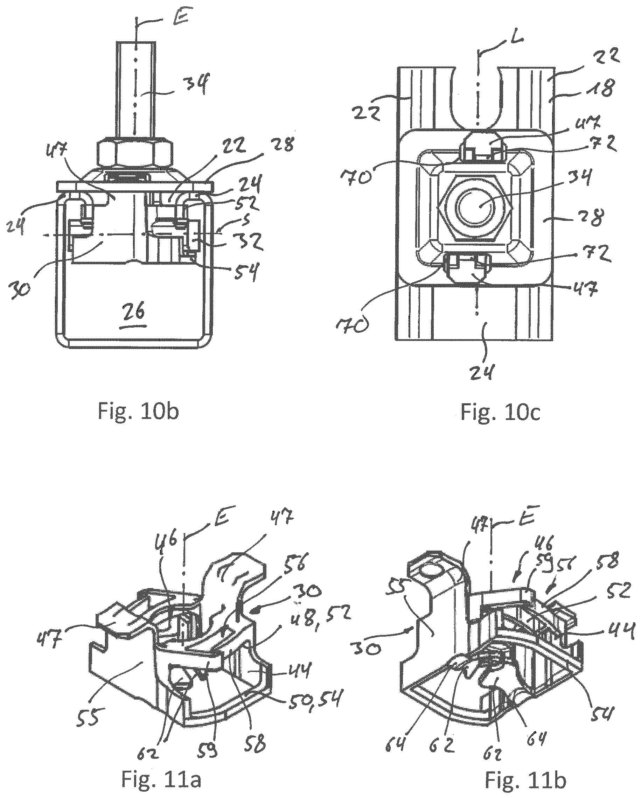

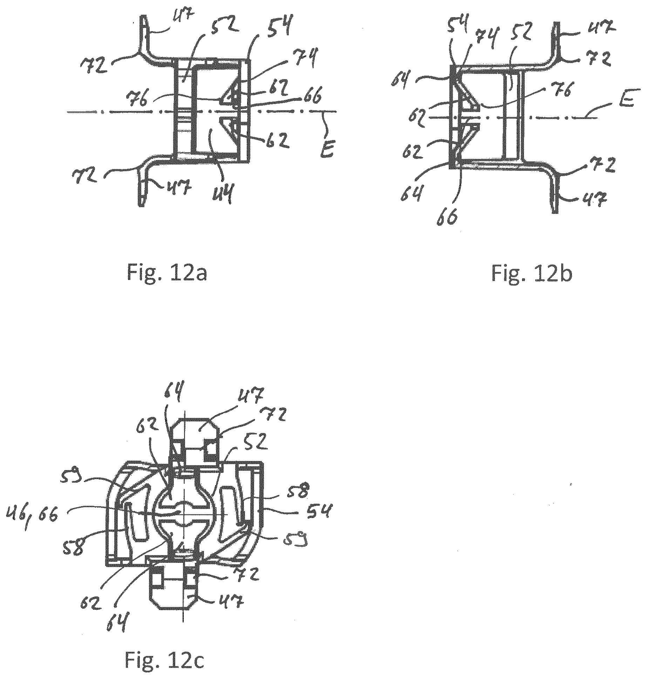

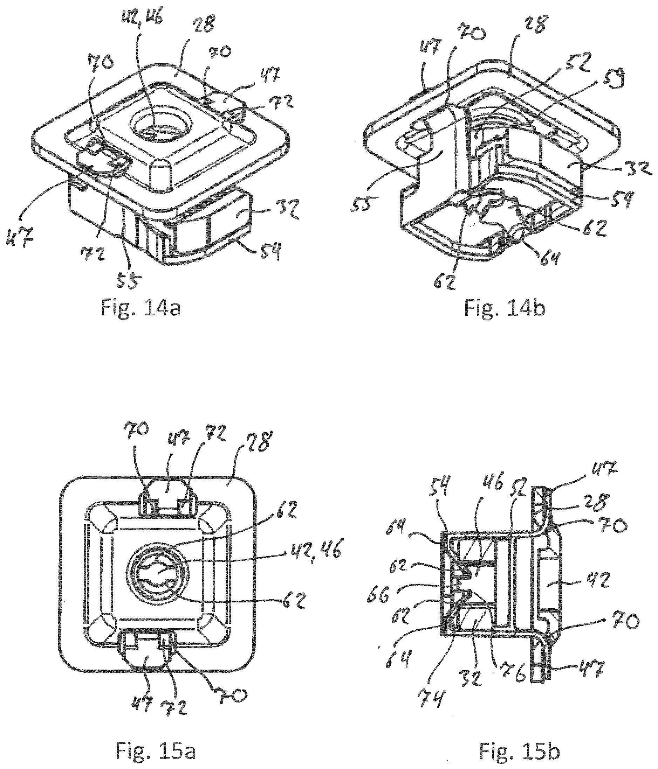

Eine zweite Ausführungsform einer Befestigungsbaugruppe 10 bzw. einer Befestigungsvorrichtung 20 ist in den Figuren 9 bis 15b gezeigt.

Der grundsätzliche Aufbau sowie die Funktionsweise entsprechen der vorstehend beschriebenen Befestigungsbaugruppe 10.

Anders als im vorgehend beschriebenen Ausführungsbeispiel ist aber die Deckplatte 28 nicht zwischen einer Vormontageposition und einer Endmontageposition verformbar. Die Deckplatte 28 ist starr ausgebildet und kann nicht zwischen den Schlitzflanken 24 eintauchen.

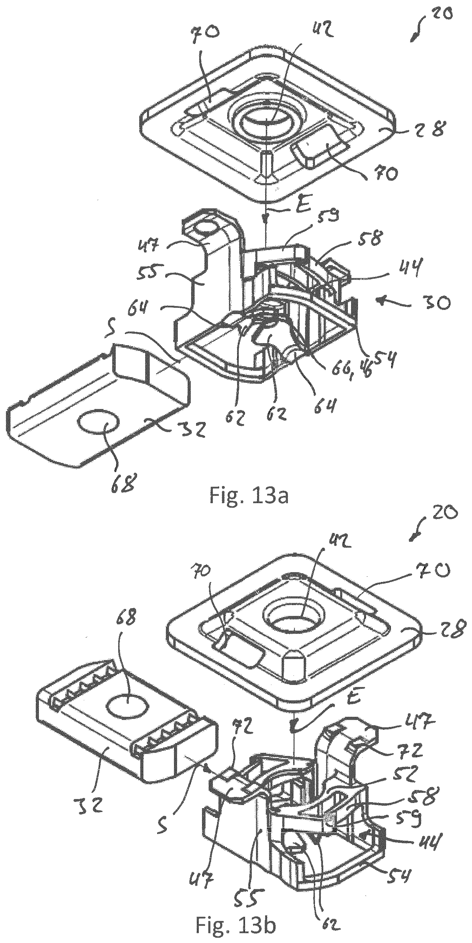

Des Weiteren sind die Federelemente 47 nicht starr an der Deckplatte 28 befestigt, sondern verschiebbar an dieser gelagert. Wie insbesondere in den Figuren 13a und 13b zu sehen ist, weist die Deckplatte 28 zwei bezüglich der Durchtrittsöffnung 46 diametral gegenüberliegende Aufnahmen 70 auf, die jeweils durch eine sich durch die Deckplatte 28 erstreckende Aussparung gebildet sind.

Die Federelemente 47 sind bogenförmig ausgebildet und erstrecken sich mit einem parallel zur Ebene der Deckplatte 28 verlaufenden Abschnitt in die Aufnahmen 70 und sind in diesen verschiebbar gelagert. Wie insbesondere in Figur 13b zu sehen ist, weisen die Federelemente 47 jeweils ein Rastelement 72 auf, das am Rand der Führung 70 verrastet und somit verhindert, dass die Federelemente 47 aus den Aufnahmen 70 herausrutschen können.

Die maximale Entfernung der Haltevorrichtung 30 von der Deckplatte 28 ist durch die Position der Rastelemente 72 festgelegt. Die Haltevorrichtung 30 kann so weit von der Deckplatte 28 in Einsteckrichtung weg bewegt werden, bis die Rastelemente 72 am Rand der Führung 70 anliegen. Vorzugsweise sind die Federelemente 47 so ausgebildet, dass die Haltevorrichtung 30 von der Deckplatte 28 weg, also die Rastelemente 72 gegen den Rand der Führung 70, gedrängt werden.

Entgegen der Einsteckrichtung kann die Haltevorrichtung 30 auf die Deckplatte 28 zu bewegt werden, wobei die Federelemente 47 nachgeben können und die Federelemente 47 in die aufnahmen 70 eintauchen, also relativ zur Deckplatte 28 verschoben werden können.

Die Haltevorrichtung ist also mehrteilig aufgebaut, nämlich aus einer Deckplatte 28 einer separaten Haltevorrichtung 30 sowie einer Gewindeplatte 32 und einer Gewindestange 34. Die Deckplatte 28 und die Haltevorrichtung 30 können so beispielsweise aus verschiedenen Materialien hergestellt werden. Beispielsweise kann die Deckplatte 28 aus einem relativ steifen bzw. druckstabilen Material hergestellt werden. Die Haltevorrichtung 30 muss dagegen nur geringe Kräfte aufnehmen, so dass diese aus einem relativ leichten und flexiblen Material hergestellt werden kann. Insbesondere können die Deckplatte 28 und die Haltevorrichtung 30 aber auch aus dem gleichen Material hergestellt werden. Die getrennte Herstellung der Deckplatte 28 und der Haltevorrichtung 30 bietet Vorteile, da diese einfacher herzustellen sind, beispielsweise in einem Spritzgussverfahren.

Die Erfindung ist nicht auf eine der vorbeschriebenen Ausführungsformen beschränkt, sondern in vielfältiger Weise abwandelbar.

### Bezugszeichenliste

- 10: Befestigungsbaugruppe
- 12: Anbauteil
- 14: Schenkel des Anbauteils
- 16: Bohrung des Anbauteils
- 18: Profilschiene
- 20: Befestigungsvorrichtung
- 22: Längsschlitz
- 24: Schlitzflanken
- 26: Aufnahmeraum
- 28: Deckplatte
- 30: Haltevorrichtung
- 32: Gewindeplatte
- 34: Gewindestange
- 35: Kopf der Gewindestange
- 36: Grundplatte
- 38: Stege
- 40: Seitenplatten
- 41: Sollverformungsstelle
- 42: Öffnung in Deckplatte
- 44: Aufnahme
- 46: Durchtrittsöffnung
- 47: Federelement
- 48: Oberseite der Aufnahme

- 50: Unterseite der Aufnahme
- 52: Rahmen
- 54: Rahmen
- 55: Steg
- 56: Federanordnung
- 58: Federlasche
- 59: Federlasche
- 60: Halteeinrichtung
- 62: Halte- und Zentrierelement
- 64: Federlasche
- 66: Öffnung
- 68: Bohrung
- 70: Aufnahme
- 72: Rastelement
- 74: erstes Ende der Halteeinrichtung
- 76: freies Ende der Halteeinrichtung/Dorn

- E: Einsteckrichtung
- L: Längsrichtung
- S: Einschubrichtung

## Patentansprüche

1. Befestigungsvorrichtung (20) zur Befestigung einer Last an einer Profilschiene (18), die einen im Wesentlichen C-förmigen Querschnitt und einen Längsschlitz (22) aufweist, wobei die Befestigungsvorrichtung (20) eine Deckplatte (28) zur Auflage auf der Profilschiene (18),
eine Gewindeplatte (32), die eine Gewindebohrung (68) aufweist und eine Länge größer als die Breite des Längsschlitzes (22) und eine Breite kleiner als die Breite des Längsschlitzes (22) besitzt,
und einer an der Deckplatte (28) angeordneten Haltevorrichtung (30) für die Gewindeplatte (32) zum Einstecken in die Profilschiene (18) aufweist, in der die Gewindeplatte (32) mit Abstand und parallel zur Deckplatte (28) gehalten ist,
wobei zwischen der Haltevorrichtung (30) und der Deckplatte (28) wenigstens ein Führungselement vorgesehen ist, mit welchem die Haltevorrichtung (30) geführt axial beweglich zu der Deckplatte (28) gelagert ist, wobei das wenigstens eine Führungselement als Federelement (47) ausgebildet ist, mit welchem die Haltevorrichtung (30) federnd mit der Deckplatte (28) verbunden ist und zumindest eine Federlasche aufweist, die sich bogenförmig zwischen der Haltevorrichtung (30) und der Deckplatte (28) erstreckt, wobei ein mit der Deckplatte (28) in Verbindung stehender Abschnitt jeweils im Wesentlichen parallel zur Ebene der Deckplatte (28) und ein an der Haltevorrichtung (30) vorgesehener Abschnitt im Wesentlichen in der Einsteckrichtung E verläuft, wobei an der Deckplatte (28) eine Aufnahme (70) für das Federelement (47) vorgesehen ist, in der das Federelement (47) gelagert ist, oder das Federelement (47) fest mit der Deckplatte (28) verbunden ist.

2. Befestigungsvorrichtung nach einem der vorhergehenden Ansprüche,
**dadurch gekennzeichnet, dass** das Federelement (47) an der Deckplatte (28) verschiebbar zur Deckplatte (28) gelagert ist.

3. Befestigungsvorrichtung nach Anspruch 2, **dadurch gekennzeichnet, dass** das Federelement (47) in der Aufnahme (70), verschiebbar gelagert ist.

4. Befestigungsvorrichtung nach einem der vorhergehenden Ansprüche,
**dadurch gekennzeichnet, dass** das Federelement (47) ein Rastelement (72) aufweist, mit dem das Federelement (47) an der Deckplatte (28) verrastet ist.

5. Befestigungsvorrichtung nach einem der vorhergehenden Ansprüche,
**dadurch gekennzeichnet, dass** zumindest zwei Federelemente (47) vorgesehen sind.

6. Befestigungsvorrichtung nach Anspruch 5, **dadurch gekennzeichnet, dass** die Federelemente (47) bezüglich einer Umfangsrichtung um die Haltevorrichtung (30) gleichmäßig verteilt angeordnet sind.

7. Befestigungsvorrichtung nach einem der vorhergehenden Ansprüche,
**dadurch gekennzeichnet, dass** eine Gewindestange (34) oder eine Schraube mit einem zum Innengewinde der Gewindeplatte (32) korrespondierenden Außengewinde vorgesehen ist, die in das Innengewinde der Gewindeplatte (32) eingedreht ist und auf der der Gewindeplatte (32) entgegengesetzten Seite der Deckplatte (28) über die Deckplatte (28) vorsteht.

8. Befestigungsvorrichtung nach einem der vorhergehenden Ansprüche,
**dadurch gekennzeichnet, dass** die Haltevorrichtung aus Kunststoff besteht und dass das wenigstens eine Führungs- oder Federelement (47) einstückig an der Haltevorrichtung angeformt ist.

9. Befestigungsbaugruppe mit einer Befestigungsvorrichtung nach einem der vorhergehenden Ansprüche und mit einer Profilschiene (18), die einen im Wesentlichen C-förmigen Querschnitt und einen Längsschlitz (22) aufweist, wobei die Länge der Gewindeplatte (32) größer ist als die Breite des Längsschlitzes (22) und die Breite der Gewindeplatte (32) kleiner ist als die Breite des Längsschlitzes (22).

10. Befestigungsbaugruppe nach Anspruch 9, **dadurch gekennzeichnet, dass** an der Deckplatte (28) und/oder an der Haltevorrichtung (30) zumindest ein Drehanschlag vorgesehen ist, der in einer Vormontageposition an der Profilschiene (18) anliegt und ein Drehen in Montagerichtung über die Vormontageposition hinaus verhindert.

## Claims

1. Fastening device (20) for fastening a load to a profile rail (18), which has a substantially C-shaped cross-section and a longitudinal slot (22), wherein the fastening device (20) has a cover plate (28) for bearing on the profile rail (18), a threaded plate (32), which has a threaded bore (68) and a length greater than the width of the longitudinal slot (22) and a width smaller than the width of the longitudinal slot (22), and a holding device (30) arranged on the cover plate (28) for the threaded plate (32) for inserting into the profile rail (18), in which the threaded plate (32) is held at a distance from and parallel to the cover plate (28),
wherein
at least one guide element is provided between the holding device (30) and the cover plate (28), by which the holding device (30) is mounted so as to be displaceably axially guided relative to the cover plate (28), wherein the at least one guide element is configured as a spring element (47), by which the holding device (30) is resiliently connected to the cover plate (28) and has at least one spring tab which extends in an arcuate manner between the holding device (30) and the cover plate (28), wherein a section connected to the cover plate (28) extends in each case substantially parallel to the plane of the cover plate (28) and a section provided on the holding device (30) extends substantially in the insertion direction E, wherein a mount (70) for the spring element (47) is provided on the cover plate (28), in which mount the spring element (47) is mounted, or the spring element (47) is securely connected to the cover plate (28).

2. Fastening device according to any one of the preceding claims, **characterized in that** the spring element (47) is mounted on the cover plate (28) to be displaceable relative to the cover plate (28).

3. Fastening device according to claim 2, **characterized in that** the spring element (47) is displaceably mounted in the mount (70).

4. Fastening device according to any one of the preceding claims, **characterized in that** the spring element (47) has a latching element (72) by which the spring element (47) is latched to the cover plate (28).

5. Fastening device according to any one of the preceding claims, **characterized in that** at least two spring elements (47) are provided.

6. Fastening device according to claim 5, **characterized in that** the spring elements (47) are arranged distributed evenly around the holding device (30) with respect to a circumferential direction.

7. Fastening device according to any one of the preceding claims, **characterized in that** a threaded rod (34) or a screw with an outer thread corresponding to the inner thread of the threaded plate (32) is provided, which is screwed into the inner thread of the threaded plate (32) and projects beyond the cover plate (28) on the side of the cover plate (28) opposite the threaded plate (32).

8. Fastening device according to any one of the preceding claims, **characterized in that** the holding device is made of plastic and **in that** the at least one guide or spring element (47) is integrally formed on the holding device.

9. Fastening assembly having a fastening device according to any one of the preceding claims and having a profile rail (18), which has a substantially C-shaped cross-section and a longitudinal slot (22), wherein the length of the threaded plate (32) is greater than the width of the longitudinal slot (22) and the width of the threaded plate (32) is smaller than the width of the longitudinal slot (22).

10. Fastening assembly according to claim 9, **characterized in that** at least one rotational stop is provided on the cover plate (28) and/or on the holding device (30), which stop rests against the profile rail (18) in a pre-mounting position and prevents rotation in the mounting direction beyond the pre-mounting position.

## Revendications

1. Dispositif de fixation (20) pour la fixation d'une charge à un rail profilé (18) qui présente une section transversale sensiblement en forme de C et une fente longitudinale (22), dans lequel le dispositif de fixation (20) présente une plaque de recouvrement (28) pour l'appui sur le rail profilé (18), une plaque filetée (32) qui présente un perçage fileté (68) et une longueur supérieure à la largeur de la fente longitudinale (22) et une largeur inférieure à la largeur de la fente longitudinale (22), et un dispositif de maintien (30) agencé au niveau de la plaque de recouvrement (28) pour la plaque filetée (32) pour l'enfichage dans le rail profilé (18), dans lequel la plaque filetée est maintenue à distance et parallèlement à la plaque de recouvrement (28),
dans lequel
au moins un élément de guidage est prévu entre le dispositif de maintien (30) et la plaque de recouvrement (28), élément avec lequel le dispositif de maintien (30) est logé en étant guidé de manière axialement mobile vers la plaque de recouvrement (28), dans lequel l'au moins un élément de guidage est formé comme un élément de ressort (47), avec lequel le dispositif de maintien (30) est élastiquement relié à la plaque de recouvrement (28) et présente au moins une languette de ressort qui s'étend en arc entre le dispositif de maintien (30) et la plaque de recouvrement (28), dans lequel une section se trouvant en liaison avec la plaque de recouvrement (28) s'étend respectivement sensiblement parallèlement au plan de la plaque de recouvrement (28) et une section prévue au niveau du dispositif de maintien (30) s'étend sensiblement dans le sens d'enfichage E, dans lequel un logement (70) pour l'élément de ressort (47) est prévu au niveau de la plaque de recouvrement (28), dans lequel l'élément de ressort (47) est logé, ou l'élément de ressort (47) est fixement relié à la plaque de recouvrement (28).

2. Dispositif de fixation selon l'une quelconque des revendications précédentes, **caractérisé en ce que** l'élément de ressort (47) au niveau de la plaque de recouvrement (28) est logé de manière mobile vers la plaque de recouvrement (28).

3. Dispositif de fixation selon la revendication 2, **caractérisé en ce que** l'élément de ressort (47) est logé de manière mobile dans le logement (70).

4. Dispositif de fixation selon l'une quelconque des revendications précédentes, **caractérisé en ce que** l'élément de ressort (47) présente un élément d'encliquetage (72), avec lequel l'élément de ressort (47) est encliqueté au niveau de la plaque de recouvrement (28).

5. Dispositif de fixation selon l'une quelconque des revendications précédentes, **caractérisé en ce qu'**au moins deux éléments de ressort (47) sont prévus.

6. Dispositif de fixation selon la revendication 5, **caractérisé en ce que** les éléments de ressort (47) sont agencés en répartition régulière par rapport à un sens périphérique autour du dispositif de maintien (30).

7. Dispositif de fixation selon l'une quelconque des revendications précédentes, **caractérisé en ce qu'**une tige filetée (34) ou une vis est prévue avec un filetage extérieur correspondant au filetage intérieur de la plaque filetée (32) qui est vissé dans le filetage intérieur de la plaque filetée (32) et fait saillie de la plaque de recouvrement (28) sur le côté opposé à la plaque filetée (32) de la plaque de recouvrement (28).

8. Dispositif de fixation selon l'une quelconque des revendications précédentes, **caractérisé en ce que** le dispositif de maintien se compose de matière plastique et **en ce que** l'au moins un élément de guidage ou de ressort (47) est formé d'un seul tenant au niveau du dispositif de maintien.

9. Assemblage de fixation avec un dispositif de fixation selon l'une quelconque des revendications précédentes et avec un rail profilé (18) qui présente une section transversale sensiblement en forme de C et une fente longitudinale (22), dans lequel la longueur de la plaque filetée (32) est supérieure à la largeur de la fente longitudinale (22) et la largeur de la plaque filetée (32) est inférieure à la largeur de la fente longitudinale (22),

10. Assemblage de fixation selon la revendication 9, **caractérisé en ce qu'**au moins une butée rotative est prévue au niveau de la plaque de recouvrement (28) et/ou au niveau du dispositif de maintien (30), butée qui repose dans une position de prémontage contre le rail profilé (18) et empêche une rotation au-delà de la position de prémontage dans le sens de montage.
